# EUROPÄISCHE PATENTANMELDUNG

(11) **EP 0 523 822 A2**
(43) Veröffentlichungstag der Anmeldung: **20.01.1993**
(21) Anmeldenummer: 92250187.9
(22) Anmeldetag: 15.07.1992
(51) Int. Cl.: G01N 21/37, F02B 77/08, G01N 21/35, G01M 15/00

(54) **Verfahren zur Untersuchung der Verbrennung in einem Verbrennungsmotor**

(30) Priorität: 17.07.1991 DE 4124116
(71) Anmelder: IRIS GmbH INFRARED & INTELLIGENT SENSORS, D-12459 Berlin (DE)
(72) Erfinder: Trull, Thomas,Dr., W-1152 Berlin (DE); Haufe, André,Dr., W-1160 Berlin (DE); Wermke, Andreas, W-1143 Berlin (DE)
(74) Vertreter: Christiansen, Henning, Dipl.-Ing.

(57) **Zusammenfassung**

Spektraler pyroelektrischer Infrarotmotorsensor sowie zugehöriges Verfahren. Durch eine geeignete Öffnung in der Motor- oder Krümmerwandung werden die zyklischen Verbrennungsvorgänqe durch die Auswertung der Infrarotstrahlung mit einem pyroelektrischen Detektor beobachtet. Der sonst benötigte Gaskanal, der Temperaturstrahler und der mechanigche Zerhacker werden erfindungsgemäß durch den zyklischen Verbrennungsvorgang und die heiße Strahlung des Motorraums ersetzt. Dabei dient der Motorraum gleichzeitig als Gaskanal. Das sich im Motorraum (1) befindende Verbrennungsgemisch (2) ist zum Zeitpunkt seiner Zündung dargestellt. Das nach der Zündung entstandene Gasgemisch (3) emittiert Infrarotstrahlung (4), welche in die pyroelektrische Detektoreinheit gelangt.

## Beschreibung

Die Erfindung betrifft ein Verfahren der im Oberbegriff des Anspruchs 1 angegebenen Art sowie eine Vorrichtung zur Durchführung des Verfahrens.

Ein derartiges Verfahren ist aus der DE 33 07 133 C2 bekannt. Es wird bei einem Gasanalysator verwendet, der zur Abgasanalyse im Abgasrohr eines Kraftfahrzeugs vorgesehen ist. Derartige Geräte sind als sogenannte Abgastester als getrennte Geräte im Einsatz und werden zur Kontrolle bei den regelmäßigen Überprüfungen von Kraftfahrzeugen auf Einhaltung der vorgeschriebenen Abgas-Grenzwerte benutzt. Dabei ist ein Infrarotgassensor vorgesehen, dessen Funktion auf der Absorption spektraler Infrarotstrahlung beruht. Der Sensor besteht neben dem als pyroelektrischer Chip ausgebildeten Infrarotdetektor noch aus einem Gaskanal, einem Temperaturstrahler und einem mechanischen Zerhacker.

Infrarotgassensoren, die auf der spektralen Emission heißer Gase beruhen, sind generell bekannt. Diese Sensoren bestehen neben dem Infrarotdetektor aus einem Probenraum, der die Erhitzung der Gase, notwendig zum Nachweis der Emissionsstrahlung, gestattet. Bekannt sind Vorrichtungen dieser Art aus US-A-4 110 619 und DE-B-33 07 133.

Der Erfindung liegt die Aufgabe zugrunde, bei einem Verfahren der eingangs genannten Gattung eine Vereinfachung zu erzielen, so daß dieses kostengünstig auch in Großserienautomobilen und während des Betriebs einsetzbar ist.

Diese Aufgabe wird mit den kennzeichnenden Merkmalen des Anspruchs 1 gelöst.

Die Erfindung schließt die Erkenntnis ein, daß mittels eines auf sich zeitlich ändernde Signale ansprechenden pyroelektrischen Detektors die Möglichkeit besteht, die bei einem Verbrennungsmotor mit der Umdrehung der Kurbelwelle einhergehenden, durch den Verbrennungsvorgang hervorgerufenen, zeitlich veränderlichen spektralen Informationen unmittelbar auszuwerten. Hiermit kann dann unmittelbar eine Bestimmung der Konzentration von einem oder mehreren Gasen wie beispielsweise CO₂, CO, NO und der Kohlenwasserstoffe direkt im Verbrennungsraum des Motors oder unmittelbar nach dem Austreten der Verbrennungsgase aus dem Motorraum in den Krümmer während der Motorumdrehung erfolgen.

Durch eine geeignete Öffnung in der Motor- oder Krümmerwandung lassen sich die zyklischen Verbrennungsvorgänge durch unmittelbare Auswertung der Infrarotstrahlung mit einem pyroelektrischen Detektor ohne zusätzliche Zerhacker-(Chopper-)Vorrichtungen analysieren, Der sonst benötigte Gaskanal, der Temperaturstrahler und der mechanische Zerhacker werden also durch den zyklischen Verbrennungsvorgang und die im Verbrennungsbereich des Motorraums aufzunehmende heiße Strahlung. Dabei dient der Zylinder- oder Krümmerbereich gleichzeitig als Gaskanal.

Die zeitliche Veränderung wird durch den Motorzyklus selbst erreicht, bei dem sich durch die Kompression, Verbrennung und Entspannung der Gase im Motor die Zusammensetzung, die Temperatur und der Druck des Abgasgemisches ändern. Bedingt durch die Änderung dieser Parameter variieren auch die Intensitäten der verschiedenen Emissionslinien der einzelnen Gasanteile. Den selben Schwankungen ist die Absorption der Temperaturstrahlung des Kohlenstoffs oder der Motor- bzw. Krümmerwandung durch die einzelnen Gasanteile unterworfen. Diese Änderungen sind aber charakteristisch für die zu ermittelnden Gasanteile und lassen eine ebenso genaue Analyse zu, wie die bisherigen Verfahren, welche auf einer mechanischen Chopperung beruhen.

Die infrarote Emissionsstrahlung und Absorptionsstrahlung tritt durch ein an der Motorwandung oder Krümmerwandung angebrachtes infrarotdurchlässiges Fenster in den Detektor ein. Nach dem Eintritt der infraroten Strahlung durch das Fenster in der Motor- oder Krümmerwandung in den Detektor werden durch ein oder mehrere spezielle Interferenzfilter charakteristische Spektralbereiche für die einzelnen Gase ausgefiltert. Im folgenden pyroelektrischen Chip werden dann diese optischen Signale in elektrische gewandelt. Die Größe dieser elektrischen Signale hängt direkt von der Konzentration der Gase im Verbrennungsraum ab und kann daher zur Bestimmung der Gaskonzentration ausgenutzt werden. Zusätzlich ist durch eine nachgeschaltete Signalauswerteschaltung auch die Bestimmung der Motordrehzahl möglich.

Bei einer vorteilhaften Weiterbildung des erfindungsgemßen Verfahrens erfolgt eine gleichzeitigen Konzentrationsbestimmung von verschiedenen Verbrennungsgasen mit mehreren Detektoren erfolgt, die jeweils mit einem der zu detektierenden Strahlung zugeordneten Interferenzfilter und einer Blende versehen sind, so daß die für das jeweilige Verbrennungsgas charakteristischen infraroten Spektralanteile getrennt zu dem jeweiligen Detektor gelangen.

Zusätzlich läßt sich aus den zeitlich veränderlichen Spektralsignalen, d.h. aus dem durch die zeitliche Änderung des Strahlungsflusses beeinflußten Ausgangssignal des Detektors, die Drehzahl des Motors ermitteln. Falls der Dektektor in einem der Zylinder angeordnet ist, wird dabei die ermittelte Frequenz der erfaßten Strahlungsänderungen noch mit dem Quotienten der Anzahl der Verbrennungsvorgänge pro Kurbelwellenumdrehung multipliziert.

Die ermittelten Signale können in bevorzugter Weise weiterverarbeitet werden, um mittels einer elektronischen Motorsteuereinheit Signale für die Steuerung des Kraft-Stoff-Luftgemisches, den Kraftstoffeinspritz-Zeitpunkt, die Kraftstoffmenge, den Zündzeitpunkt, die Öffnungszeiten der Ventile zu erzeugen. Auf diese Weise lassen sich die Verbrennungsvorgänge in solcher Weise steuern, daß die Schadstoffbelastung beim Betrieb ein Minimum ist und weitere Elemente zur Schadstoffreduzierung, wie beispielsweise ein Katalysator, nur gering belastet sind und damit möglichst effektiv arbeiten.

Bei einer vorteilhaften Weiterbildung zur Durchführung des Verfahrens ist vor dem Detektor ein Interferenzfilter für die Selektion eines für ein ausgewähltes Verbrennungsgas charakteristischen Spektralbereichs vorgesehen.

Insbesondere kann dabei zur gleichzeitigen Konzentrationsbestimmung von verschiedenen Verbrennungsgasen mit mehreren Detektoren, zwischen dem jeweiligen pyroelektrischen Detektor und dem zugeordneten Interferenzfilter eine Blende vorgesehen sein, derart daß die für das jeweilige Verbrennungsgas charakteristischen infraroten Spektralanteile getrennt zu dem zugeordneten Detektor gelangen.

Um das Ausgangssignal des Detektors möglichst von äußeren Störungen frei zu halten und zu einer von diesem entfernten einen Prozessor enthaltenden zentralen Verarbeitungsteil ohne Beeinträchtigung übertragen zu können, ist dem pyroelektrischen Detektor ein Impedanzwandler nachgeschaltet. Dabei enthält der Verarbeitungsteile eine Auswerteschaltung, die aus dem Ausgangssignal des pyroelektrischen Detektors die Konzentration des jeweiligen befindlichen Gases ermittelt.

Bei der Erfassung mehrerer sptektraler Anteile jeweils unterschiedlicher Gase besteht der Dektektor bevorzugt aus mehreren Einzeldetektoren, die auf einem gemeinsamen Chip angeordnet sind.

Um mögliche Beeinträchtigungen durch Schallereignisse oder Schwingungen zu unterdrücken, ist auf dem einen oder mehrere Einzeldetektoren aufweisenden pyroelektrischen Chip ein Kompensationselement zur Unterdrückung von Mikrophonieeinflüssen vorgesehen. Hierbei wird von einem Schall- oder Schwingungsaufnehmer ein Signal abgegeben, welches ein Maß für die am Meßort vorhandenen Schwingungen bildet. Dieses Signal wird dazu benutzt, um die Einflüsse der störenden Schwingungen auf das zu messende Signal zu kompensieren. Dies kann in der Weise erfolgen, daß die Messung unterbrochen wird, wenn Schwingungsereignisse erscheinen, die einen vorgegebenen Pegel überschreiten. Andererseits kann aber auch das Meßsignal mit den störenden Ereignissen mittels korrelierenden Verfahren derart überlagert werden, daß eine Störungsverminderung eintritt.

Vorteilhaft ist es ferner, wenn der oder die Einzeldetektoren zur Verminderung von Mikrophonieeinflüssen fest bzw. starr mit einem Träger verbunden ist.

Um externe Störungseinflüsse zusätzlich möglichst herabzusetzen ist in einer günstigen Weiterbildung der Erfindung auf dem pyroelektrischen Chip ein zusätzliches pyrolektrisches Element zur Kompensation der von der Detektorumgebungstemperatur herrührenden Einflüsse vorgesehen.

Als Material für das Fenster zum Verbrennungsraum bzw. zum Inneren des Krümmers eignet sich insbesondere Material mit besonders hoher mechanischer Festigkeit, insbesondere Silizium, besteht. Bei einer anderen bevorzugten Ausführung der Erfindung weist das Fenster in der Motor- und/oder Krümmerwandung ein für den auszuwertenden Infrarotbereich durchlässiges Lichtleitkabel auf.

Die vorliegende Erfindung weist damit, in entscheidender Abwandlung zu bekannten Lösungen, folgende wesentliche Gesichtspunkte auf
- die Gasmeßstrecke liegt nicht in einer speziell gefertigten Meßküvette, sondern ist einfach der für den Detektor einsehbare Motor- oder Krümmerraum;
- der Temperaturstrahler, sonst benötigt zum Nachweis der intensiven Absorptionslinien im Gassensor, ist beim Absorptionsverfahren ersetzt durch den Kohlenstoff hoher Temperatur und die Motor- bzw. Krümmerwandung;
- die zur Registrierung mittels Pyrodetektoren notwendige zeitliche Veränderung des Strahlungsflusses, die im herkömmlichen Gassensor durch einen mechanischen Zerhacker oder durch eine Modulation der Intensität des Temperaturstrahlers erreicht wird, ist beim hier vorgeschlagenen Verfahren ohne zusätzliche Maßnahmen durch die im Motorzyklus eingeprägte Frequenz erzielbar.
- der dominante Vorteil des hier dargestellten spektralen pyroelektrischen Infrarotmotorsensors liegt im Falle der Messung von Infrarotemission zusätzlich darin, daß zur Anregung der Emission auf eine besondere Heiz- oder Kompressionseinrichtung am Gasprobenraum verzichtet werden kann.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 ein Ausführungsbeispiel eines mit dem erfindungsgemäßen spektralen pyroelektrischen Infrarotmotorsensor versehenen Verbrennungsmotors in schematischer Darstellung,
Figur 2 den prinzipiellen Aufbau einer Detektoreinheit des Ausführungsbeispiels gemäß Figur 1 sowie
Figur 3 die dem erfindungsgemäßen Detektor nachgeschalteten Baugruppen zur Weiterverarbeitung des erfindungsgemäßen Motorsensors in Blockschaltung.

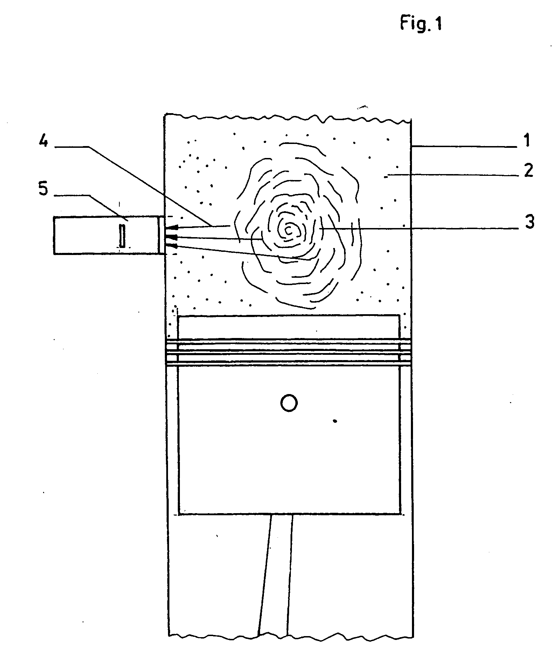

Bei dem in Figur 1 in seiner Funktionsweise schematisch wiedergegebenen spektralen pyroelektrischen Infrarotmotorsensor ist das sich im Motorraum 1 befindende Verbrennungsgemisch 2 zum Zeitpunkt seiner Zündung dargestellt. Das nach der Zündung entstandene Gasgemisch 3 emittiert Infrarotstrahlung 4, welche durch ein Infrarotstrahlung durchlassendes Fenster in die Detektoreinheit 5 gelangt.

Eine derartige Erfassung von Daten über die Konzentration der einzelnen Gasbestandteile im Abgas direkt im Auto bildet einen neuen Schwerpunkt der Kraftfahrzeugsensorentwicklung. Bekannt sind Lambda-Sonden zur Messung der Sauerstoffkonzentration nach dem Verbrennungsvorgang und Infrarotgassensoren, die in der Kraftfahrzeugindustrie vornehmlich in Abgasreglern eingesetzt werden.

Durch die Öffnung in der Motor- oder Krümmerwandung lassen sich somit die zyklischen Verbrennungsvorgänge durch die Auswertung der Infrarotstrahlung mit einem pyroelektrischen Detektor beobachten. Der sonst benötigte Gaskanal, ein Temperaturstrahler und ein mechanigche Zerhacker werden erfindungsqemäß durch die zyklischen Schwankungen des Verbrennungsvorgang bzw. die heiße Strahlung des Motorraums ersetzt. Dabei dient der Motorraum gleichzeitig als Gaskanal.

Das sich im Motorraum 1 befindende Verbrennungsgemisch 2 ist zum Zeitpunkt seiner Zündung dargestellt. Das nach der Zündung entstandene Gasgemisch 3 emittiert Infrarotstrahlung 4, welche in die pyroelektrische Detektoreinheit gelangt und erlaubt somit eine Analyse der im Motorraum stattfindenden Verbrennungsvorgänge. Entsprechend lassen sich auch die durch erhitzte Teile - beispielsweise der Kolben - ausgeführten Bewegungsvorgänge analysieren.

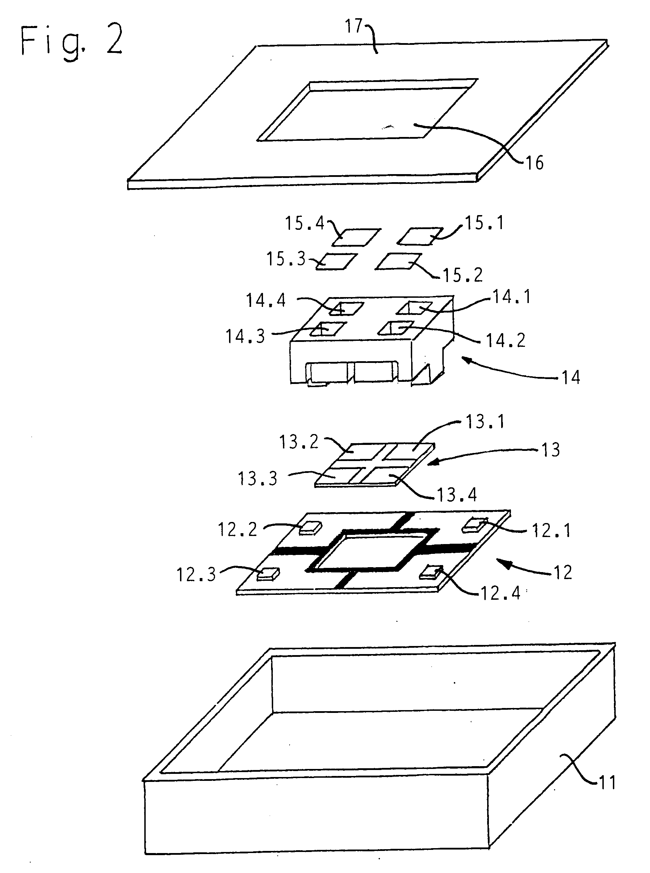

Bei dem in Figur 2 dargestellten prinzipiellen Aufbau der Dektoreinheit ist in einer das Gehäuseunter bildenden Teilschale 11 eine Leiterplatte 12 vorgesehen, welche die zur analogen Signalvorverarbeitung notwendigen Baugruppen 12.1 bis 12.4 trägt, welche jeweils einem der weiter unten beschriebenen einzelnen pyroelektrischen Elemente zugeordnet sind. Insbesondere handelt es sich hierbei um je einen Impedanzwandler. Ein oder mehrere Kompensationsschaltungen, wie sie weiter unten noch näher dargestellt sind, können dabei auch für die Gesamtanordnung nur jeweils einfach vorgesehen sein. Auf derselben Leiterplatte aufgebracht ist eine strukturierter elektronischer Baustein, welcher in Form eines Chips das pyroelektrische Element 13 bildet, welches in vier einzelne empfindliche Elemente 13.1 bis 13.4 untergliedert ist, welche jeweils getrennte Ausgangssignale abgeben. Jedem der Elemente 13.1 bis 13.4 ist dabei ein Impedanzwandler der Baugruppen 12.1 bis 12.4 nachgeordnet.

Als Mittel zur Kanalisation der einfallenden Infrarotstrahlung ist eine optische Modulblende 14 vorgesehen. In diese Modulblende sind in entsprechende, Blenden bildende Aussparungen 14.1 bis 14.4 die verschiedenen, jeweils einem zu analysierenden spektralen Anteil zugeordneten Interferenzfilter 15.1 bis 15.4 eingebracht. Den Abschluß bildet der mit einem für Infrarotstrahlung durchlässigen Fenster 16 versehene Gehäusedeckel 17.

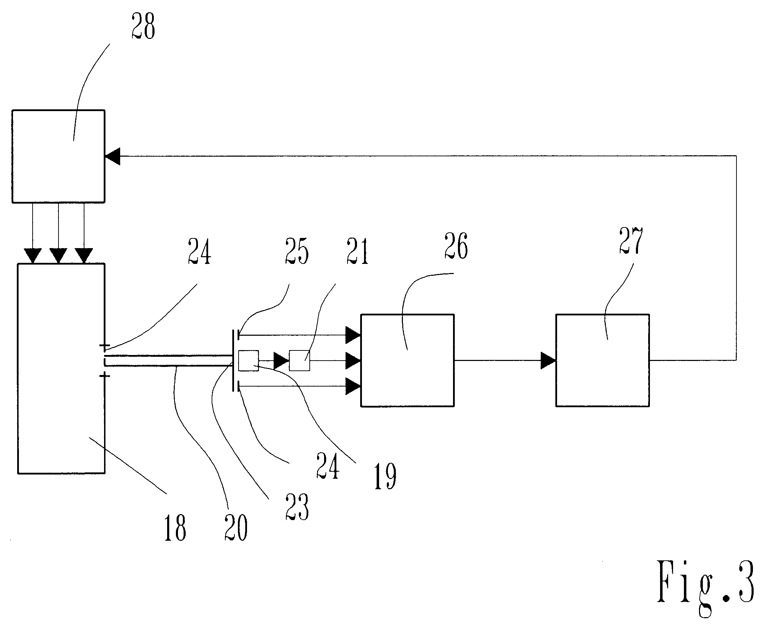

In dem Blockschaltbild gemäß Figur 3 ist in prinzipieller Darstellung ein Anordnung zur Ausführung des erfindungsgemäßen Verfahrens zur Untersuchung der Verbrennungs- und damit zusammenhängender Vorgänge in einem Verbrennungsmotor 18 dargestellt. Der spektrale pyroelektrische Detektor 19 nimmt durch eine mit einem für Infrarotstrahlung transparenten Fenster versehene Öffnung hindurch die infolge des Verbrennungsvorgangs hervorgerufenen Erhitzung verursachte Infrarotstrahlung auf.

Das Fenster besteht aus einem Material mit besonders hoher mechanischer Festigkeit, insbesondere Silizium. Weiterhin ist Fenster mit einem für den auszuwertenden Infrarotbereich durchlässigen Lichtleitkabel 20 versehen, welches eine optische Verbindung zu dem Detektor 19 bildet.

Dem Detektor 19 ist ein Impedanzwandler 21 nachgeschaltet. Dabei kann der pyroelektrische Detektor auch in der Weise als Mehrelementesensor ausgebildet sein, daß mehrere Einzeldetektoren auf einem Chip angeordnet sind, wie es in Figur 2 dargestellt ist. Weiterhin ist auf dem einen oder mehrere Einzeldetektoren aufweisenden - schematisch angedeuteten - pyroelektrischen Chip 23 ein Kompensationselement 24 zur Unterdrückung von Mikrophonieeinflüssen vorgesehen, wobei zur weiteren Verminderung von Mikrophonieenflüssen der pyroelektrische Chip fest mit dem den Träger bildenden Chip 23 verbunden ist. Weiterhin ist ist auf dem Chip 23 ein Element 25 zur Temperaturkompensation vorgesehen, welches mögliche Einflüsse der Detektorumgebungstemperatur ausgleicht. Von dem Element 25 wird in Abhängigkeit von der Temperatur in der Auswerteeinheit 26 ein Korrektursignal erzeugt, welches eine Abweichung des Ausgangssignals des pyrolitischen Detektors 20 in Bezug auf eine Vergleichstemperatur durch die Summierung eines entgegengerichteten entsprechenden Signals ausgleicht. Entsprechend wird auch vondem Element 24 in Abhängigkeit Schallereignissen oder Vibrationen in der Auswerteeinheit 26 ein Korrektursignal erzeugt, welches eine dadurch hervorgerufene Abweichung des Ausgangssignals des pyrolitischen Detektors 20 durch die Summierung eines entgegengerichteten entsprechenden Signals ausgleicht.

Von der Auswerteeinheit 26 wird nunmehr unmittelbar die zeitliche Änderung der durch die zyklischen Verbrennungsvorgänge verursachten zyklisch schwankenden Infrarotemissionsstrahlung heißer Gase im Motor- oder Krümmerraum; der durch Gase verursachten zyklisch schwankenden Absorption der Temperaturstrahlung des im Motorraum vorhandenen Kohlenstoffs, der Motorwandung oder der Krümmerwandung bzw. der durch die Kolbenbewegung des Verbrennungsmotors hervorgeru Ausgangssignale des Detektors 20 zur Analyse der Zünd- und/oder Verbrennungsvorgänge des Kraftfahrzeugmotors ausgewertet werden.

Durch die Auswerteschaltung 26 wird der zeitlichen Änderung des Ausgangssignals des pyroelektrischen Detektors die Konzentration eines im Verbrennungsmotorraum befindlichen Gases ermittelt, so daß eine Abgasanalyse bereits im Verbrennungsraum möglich wird. Die daraus resultierenden kurzen Wege ermöglichen eine Regelung der Verbrennungsmaschine durch Auswertung der Abgasanalyse und entsprechender Ansteuerung einer elektronischen Motorsteuereinheit 28 mit kleiner Zeitkonstante, so daß die resultierenden Änderungen des Motorbetriebs (Veränderung des Kraftstoff-Luftgemisches, der Einspritzzeiträume und -mengen sowie der Zündzeitpunkte unmittelbar wirksam werden können.

Hierbei wird durch jeweils mit einem der zu detektierenden Strahlung zugeordneten Interferenzfilter und einer zwischen Interferenzfilter und pyroelektrischem Detektor angeordneten Blende die für das jeweilige Verbrennungsgas charakteristischen infraroten Spektralanteile getrennt ausgewertet und ermöglicht somit eine genaue Einsicht in die laufenden Verbrennungsvorgänge.

Weiterhin wird aus der durch das Fenster und ein breitbandiges Filter auf den pyroelektrischen Detektor fallenden zeitlichen Änderung des Signalflusses, hervorgerufen durch die zyklische Bewegung des Kolbens im Motor- bzw. Zylinderraum, die Drehzahl des Motors ermittelt, so daß ohne Mehraufwand eine Bezugsgröße für die betreffenden Steuer- und Auswertungsvorgänge zur Verfügung steht.

Eine der Auswerteschaltung 26 nachgeschaltete Verarbeitungsstufe 27 besteht aus einem Zähler, Mittelwertbildner und/oder Integrator und ist somit in der Lage, die von der Auswerteschaltung zur zyklischen Ermittlung der Amplituden, der Steigungen von Vorder- und/oder Rückflanke, Integrale oder sonstiger Form- oder Korrelationskriterien aus den zyklisch schwankenden Ausgangssignalen des Detektors herausgefilterten Informationen einer Nachverarbeitung zu unterziehen.

Da es sich bei den vom Detektor abgegebenen Signalen um mit der Motordrehzahl korrelierte Impulssignale handelt, können in der Auswerteschaltung solche Signalverarbeitungsverfahren benutzt werden, welche generell zur Analyse von Impulsen bekannt sind. Hierbei lassen sich die vorgenannten Methoden anwenden. Bei der Nachverarbeitung in der Stufe 27 kann werden dann gegebenenfalls sich zyklisch verändernden Signale in ein stationäres Signal umgewandelt. Hiebei können entweder durch "Synchronisation" eines Zeitfensters auf den interessierenden Signalbereich diese Signalanteile nach Art eines Oszilloskops stationär gemacht werden oder aber die Impulse werden integriert und anschließend durch ein drehzahlproportionales Signal dividiert, so daß das Meßergebnis drehzahlunabhängig ist. Ein integriertes Signal stationäres von der Kolbenbewegung abgeleitetes Signal bildet ein - analoges - Maß für die Drehzahl. Bei digitaler Verarbeitung können die Impulse innerhalb eines festen Zeitfensters gezählt werden, so daß sich ein drehzahlabhängiger Zählwert ergibt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Verfahren zur Untersuchung der Verbrennungs- und damit zusammenhängender Vorgänge in einem Verbrennungsmotor mit einem spektralen pyroelektrischen Detektor, der durch eine mit einem für Infrarotstrahlung transparenten Fenster versehene Öffnung hindurch die infolge des Verbrennungsvorgangs hervorgerufenen Erhitzung verursachte Infrarotstrahlung aufnimmt,
**dadurch gekennzeichnet,**
daß unmittelbar die zeitliche Änderung der
durch die zyklischen Verbrennungsvorgänge verursachten zyklisch schwankenden Infrarotemissionsstrahlung heißer Gase im Motor- oder Krümmerraum und/oder
der durch Gase verursachten zyklisch schwankenden Absorption der Temperaturstrahlung des im Motorraum vorhandenen Kohlenstoffs, der Motorwandung oder der Krümmerwandung,
hervorgerufenen Ausgangssignale des Detektors zur Analyse der Zünd- und/oder Verbrennungsvorgänge des Kraftfahrzeugmotors ausgewertet werden.

2. Verfahren nach Anspruch 1, **dadurch gekennzeichnet,** daß aus der zeitlichen Änderung des Ausgangssignals des pyroelektrischen Detektors die Konzentration eines im Verbrennungsmotorraum befindlichen Gases ermittelt wird.

3. Verfahren nach Anspruch 2, **dadurch gekennzeichnet,** daß über ein jeweils mit einem der zu detektierenden Strahlung zugeordneten Interferenzfilter und einer zwischen Interferenzfilter und pyroelektrischem Detektor angeordneten Blende die für das jeweilige Verbrennungsgas charakteristischen infraroten Spektralanteile getrennt zu dem jeweiligen Detektor gelangen.

4. Verfahren nach einem der vorangehenden Ansprüche, **dadurch gekennzeichnet,** daß aus der durch das Fenster und ein breitbandiges Filter auf den pyroelektrischen Detektor fallenden zeitlichen Änderung des Signalflusses, hervorgerufen durch die zyklische Bewegung des Kolbens im Motor- bzw. Zylinderraum, die Drehzahl des Motors ermittelt wird.

5. Sensoranordnung zur Durchführung des Verfahrens nach einem der vorangehenden Ansprüche,
**gekennzeichnet durch**
eine Auswerteschaltung zur zyklischen Ermittlung der Amplituden, der Steigungen von Vorder- und/oder Rückflanke, Integrale oder sonstiger Form- oder Korrelationskriterien der
durch die zyklischen Verbrennungsvorgänge verursachten zyklisch schwankenden Infrarotemissionsstrahlung heißer Gase im Motor- oder Krümmerraum und/oder
der durch Gase verursachten zyklisch schwankenden Absorption der Temperaturstrahlung des im Motorraum vorhandenen Kohlenstoffs, der Motorwandung oder der Krümmerwandung und/oder
der zyklischen Bewegung des Kolbens
hervorgerufenen und der Auswerteschaltung als Eingangssignal zugeführten mindestens einen Ausgangssignals des Detektors, wobei die Ausgangssignale der Auswerteschaltung, gegebenenfalls nach Passieren einer oder mehrerer nachfolgender Signalverarbeitungsstufen, eine für Zünd- und/oder Verbrennungsvorgänge des Motors charakteristischen Größe bilden.

6. Sensoranordnung nach Anspruch 5, **dadurch gekennzeichnet,** daß die nachgeordnete Verarbeitungsstufe aus einem Zähler, Mittelwertbildner und/oder Integrator besteht.

7. Sensoranordnung nach einem der vorangehenden Ansprüche, **gekennzeichnet durch** eine nachgeschaltete elektronische Motorsteuereinheit.

8. Sensoranordnung nach einem der Ansprüche 5 bis 7, **dadurch gekennzeichnet,** daß vor dem Detektor ein Interferenzfilter für die Selektion eines für ein Verbrennungsgas charakteristischen Spektralbereichs vorgesehen ist.

9. Sensoranordnung nach einem der Ansprüche 5 bis 8, **dadurch gekennzeichnet,** daß die Konzentration eines im Verbrennungsmotorraum befindlichen Gases ein Ausgangssignal der Signalauswerteschaltung bildet.

10. Sensoranordnung nach einem der Ansprüche 5 bis 9, **dadurch gekennzeichnet,** daß zur gleichzeitigen Konzentrationsbestimmung von verschiedenen Verbrennungsgasen mehrere Detektoren vorgesehen sind, die jeweils mit einem der zu detektierenden Strahlung zugeordneten Interferenzfilter und einer zwischen Interferenzfilter und pyroelektrischem Detektor angeordneten Blende versehen sind, so daß die für das jeweilige Verbrennungsgas charakteristischen infraroten Spektralanteile getrennt zu dem jeweiligen Detektor gelangen.

11. Sensoranordnung nach einem der vorangehenden Ansprüche, **dadurch gekennzeichnet,** daß das Ausgangssignal der Auswerteschaltung bei durch das Fenster und ein breitbandiges Filter auf den pyroelektrischen Detektor fallendem Signalfluß, hervorgerufen durch die zyklische Bewegung des Kolbens im Motor- bzw. Zylinderraum, ein Maß für die Drehzahl des Motors bildet.

12. Sensoranordnung nach einem der Ansprüche 5 bis 11, **dadurch gekennzeichnet,** daß dem pyroelektrischen Detektor eine Impedanzwandlerschaltung nachgeschaltet ist.

13. Sensoranordnung nach einem der Ansprüche 5 bis 12, **dadurch gekennzeichnet,** daß der pyroelektrische Detektor in der Weise als Mehrelementesensor ausgebildet ist, daß mehrere Einzeldetektoren auf einem Chip angeordnet sind.

14. Sensoranordnung nach Anspruch 13, **dadurch gekennzeichnet,** daß auf dem einen oder mehrere Einzeldetektoren aufweisenden pyroelektrischen Chip ein Kompensationselement zur Unterdrückung von Mikrophonieeinflüssen vorgesehen ist.

15. Sensoranordnung nach Anspruch 14, **dadurch gekennzeichnet,** daß der einen oder mehrere Einzeldektoren aufweisende pyroelektrische Chip zur Verminderung von Mikrophonieeinflüssen fest mit einem Träger verbunden ist.

16. Sensoranordnung nach einem der Ansprüche 5 bis 15, **dadurch gekennzeichnet,** daß auf dem pyroelektrischen Chip ein pyrolektrisches Element zur Temperaturkompensation der Detektorumgebungstemperatur vorgesehen ist.

17. Sensoranordnung nach einem der vorangehende Ansprüche, **dadurch gekennzeichnet,** daß das Fenster aus einem Material mit besonders hoher mechanischer Festigkeit, insbesondere Silizium, besteht.

18. Sensoranordnung nach einem der vorangehenden Ansprüche, **dadurch gekennzeichnet,** daß das Fenster in der Motor- und/oder Krümmerwandung ein für den auszuwertenden Infrarotbereich durchlässiges Lichtleitkabel aufweist.
